# EUROPEAN PATENT APPLICATION

(11) **EP 2 746 774 A1**
(43) Date of publication of application: **25.06.2014**
(21) Application number: 12198223.5
(22) Date of filing: 19.12.2012
(51) Int. Cl.: G01N 35/00, G01N 35/02

(54) **System and method for testing liquid samples**

(71) Applicant: F.Hoffmann-La Roche AG, 4070 Basel (CH); Roche Diagnostics GmbH, 68305 Mannheim (DE)
(72) Inventor: Bucher, Marco, 6276 Hohenrain (CH); Schacher, Gottlieb, 6010 Kriens (CH)
(74) Representative: Gebauer, Dieter Edmund

(57) **Abstract**

The present invention pertains to an automated system for testing liquid samples, comprising a first analytical unit for carrying out at least one first diagnostic test comprising a rotatable first vessel holder for detachably holding reaction vessels; a second analytical unit for carrying out at least one second diagnostic test comprising a stationary second vessel holder for detachably holding reaction vessels; a pipetting unit comprising one or more pipettors for dispensing and/or withdrawing liquids into/from the reaction vessels; a reagent compartment for receiving reagent containers containing at least two types of reagents adapted to the first and second diagnostic tests; a sampling unit for receiving samples for the first and second diagnostic tests; at least one loading/unloading unit for loading and/or unloading reaction vessels on/from the first vessel holder; a reaction vessel transferring unit comprising at least one gripper for gripping one reaction vessel for transferring reaction vessels from the first vessel holder to the second vessel holder and/or from the second vessel holder to the first vessel holder; a controller configured to operate the units for carrying out the first and/or second diagnostic tests on the samples comprising operating the loading/unloading unit for loading reaction vessels on the first vessel holder and operating the reaction vessel transferring unit for transferring reaction vessels from the first vessel holder to the second vessel holder and/or from the second vessel holder to the first vessel holder. The invention further relates to a corresponding method for testing liquid samples.

## Description

### TECHNICAL FIELD

The present invention is in the field of analytical sample processing and relates to an automated system and method for testing liquid samples.

### BACKGROUND OF THE INVENTION

In recent years, clinical analyzers offering a broad variety of analytical methods have become commercially available. Depending on the specific analyzer used, samples can be tested by various diagnostic methods in an automated manner.

As a matter of fact, depending on the number of analytical units, analyzers can have a comparably large footprint. Furthermore, since the analytical methods may differ in cycle times as given by the time required for processing one sample, the processing of samples can be blocked until an on-going run of analytical method is completed so that the processing of samples can be rather time-consuming.

In light of the foregoing, it is desirable to improve conventional clinical analyzers provided with a number of analytical units offering various analytical methods. Specifically, it is desirable to have an analyzer with a comparably small footprint and a number of shared resources which allow for a highly time and cost-efficient sample processing. These and further objects are met by a system and method of testing liquid samples according to the independent claims. Preferred embodiments are given by the dependent claims.

### SUMMARY OF THE INVENTION

A new automated system for testing liquid samples is proposed. The system can be configured in various ways in accordance with specific demands of the user and, e.g., can be particularly useful in connection with automated analyzers for analyzing samples by various analytical methods such as, but not limited to, clinical-chemical, immunochemical and biochemical analysis items.

The term "sample", as used herein, refers to a material suspected of containing one or more analytes of interest. The sample can be derived from any biological source, such as a physiological fluid, including, blood, saliva, ocular lens fluid, cerebral spinal fluid, sweat, urine, milk, ascites fluid, mucous, synovial fluid, peritoneal fluid, amniotic fluid, tissue, cells or the like. The sample can be pre-treated prior to use, such as preparing plasma from blood, diluting viscous fluids, lysis or the like. Methods of treatment can involve filtration, distillation, concentration, inactivation of interfering components, and the addition of reagents . A sample may be used directly as obtained from the source or following a pre-treatment to modify the character of the sample, e.g., after being diluted with another solution or after having been mixed with reagents, e.g., to carry out one or more diagnostic assays like clinical chemistry assays, immunoassays, coagulation assays, nucleic acid testing, etc. The term "sample" as used herein is therefore not only used for the original sample but also relates to a sample which has already been processed (pipetted, diluted, mixed with reagents, enriched, having been purified, having been amplified etc.).

The term "reagent" as used herein indicates a composition required for treatment of a sample. Reagents may be any liquid, e.g. a solvent or chemical solution, which needs to be mixed with a sample and/or other reagent in order e.g. for a reaction to occur, or to enable detection. A reagent may be for example a diluting liquid, including water, it may comprise an organic solvent, it may comprise a detergent, it may be a buffer. Reagents may also be dry reagents adapted e.g. to be dissolved by a sample, another reagent or a diluting liquid. A reagent in the more strict sense of the term may be a liquid solution containing a reactant, typically a compound or agent capable e.g. of binding to or chemically transforming one or more analytes present in a sample. Examples of reactants are enzymes, enzyme substrates, conjugated dyes, protein-binding molecules, nucleic acid binding molecules, antibodies, chelating agents, promoters, inhibitors, epitopes, antigens, etc. According to one embodiment reagents form homogeneous mixtures with samples and are adapted to carry out homogeneous assays. According to another embodiment reagents are heterogeneously mixed with samples and are therefore adapted to carry out heterogeneous assays. An example of heterogeneous assay is a heterogeneous immunoassay, wherein some of the reactants, e.g. capturing antibodies, are immobilized on a solid support. Examples of solid supports are streptavidin coated beads, e.g. magnetic beads, or latex beads suspended in solution, used e.g. in latex agglutination and turbidimetric assays.

According to one embodiment, the system comprises a first analytical unit for carrying out at least one first diagnostic test. The first analytical unit comprises a rotatable first vessel holder for detachably holding reaction vessels. In one embodiment, the system comprises a second analytical unit for carrying out at least one second diagnostic test. The second analytical unit comprises a stationary second vessel holder for detachably holding reaction vessels.

As used herein, the term "analytical unit" relates to a functional (and optionally structural) entity adapted for carrying out one or more diagnostic tests. In one embodiment, each of the first and second analytical units is a modular unit.

As used herein, the term "vessel holder" relates to any device capable of holding one or more sample vessels in dedicated vessel positions, wherein each sample vessel can be hold in one vessel position as given by a region of the vessel holder adapted for removably holding one sample vessel. The first vessel holder is configured as a rotor which can be rotated so as to bring reaction vessels loaded thereon at different angular positions. Contrary thereto, the second vessel holder is kept stationary with respect to the first vessel holder so that the first vessel holder can be rotated with respect to the second vessel holder. In one embodiment, the second vessel holder has a linear arrangement of holding seats, each of which being capable of holding one reaction vessel.

As used herein, the term "reaction vessel" relates to any device capable of containing liquids such as samples and reagents. In one embodiment, the reaction vessel is a cuvette.

The term "cuvette" as used herein indicates a vessel comprising a body at least in part optically transparent adapted to receive liquids in an inner space and to allow the photometric measurement of a liquid sample contained therein, i.e. the measurement of changes in optical transmission, such as absorbance and scattering, used in the optical analysis of analytes present in a sample. The cuvette may be used in the performance of scattering assays to detect the result of a chemical or biological reaction or to monitor the progress of a chemical or biological reaction, e.g. in a coagulation assay, agglutination assay, turbidimetric assay. According to one embodiment the cuvette body comprises side walls, a closed bottom and an upper opening for allowing liquids to be introduced in the inner space formed by the side walls and the closed bottom. According to one embodiment the cuvette comprises at least one lip projecting outwards of the cuvette body in proximity of the upper opening. This lip may be convenient when handling the cuvette and/or for holding the cuvette in a cuvette holding position. According to one embodiment the cuvette is manufactured in one piece by injection moulding polymeric material. According to one embodiment the volume is below 1 mL and is adapted to receive a volume of liquid below 0.5 mL. According to one embodiment the body comprises side walls and two openings to allow liquid to flow through. The cuvette may thus be embodied as a channel, tube or capillary flow-through vessel. The cuvette may have an inner volume in the millilitre or microliter range.

The first and second analytical units are adapted for performing first and second diagnostic tests, respectively. Generally, the first and second diagnostic tests are different with respect to each other. In one embodiment, the first and second diagnostic tests are related to clinical-chemical, immunochemical and/or biochemical methods so as to determine corresponding analysis items of the samples. In one embodiment, a cycle time (i.e. time for processing one sample) of the second diagnostic test is longer than a cycle time of the first diagnostic test. Specifically, in one embodiment, the second diagnostic test is a coagulation test involving optically detecting the turbidity of the samples, e.g. after mixing with reagent, and the first diagnostic test is related to determining clinical-chemical test parameters of the samples.

In one embodiment, the system comprises a pipetting unit comprising one or more pipettors for dispensing and/or withdrawing liquids into/from the reaction vessels. Specifically, in one embodiment, the pipetting unit comprises at least one first pipettor for pipetting one or more reagents of the first diagnostic test(s) and at least one second pipettor for pipetting one or more reagents of the second diagnostic test(s). In one embodiment, the second pipettor is heatable for heating reagent contained therein. Specifically, in one embodiment, the pipetting unit comprises one first pipettor for pipetting samples for the first and second diagnostic tests and one or more reagents of the first diagnostic test (s) and one heatable second pipettor for pipetting reagents of the second diagnostic test(s). In one embodiment, each pipettor comprises one or more pipetting channels, with each pipetting channel including one pipette connected to a pump for generating a positive or negative pressure therein for aspirating or dispensing liquids. In one embodiment, the first pipettor includes one pipetting channel for pipetting samples and one or more reagents related to the first diagnostic test(s) and the second pipettor includes plural pipetting channels for pipetting one or more reagents related to the second diagnostic test(s), with one of the pipettes of the second pipettor being heatable for heating reagent contained therein.

In one embodiment, the system comprises a reagent compartment for receiving reagent containers containing at least two types of reagents adapted to the first and second diagnostic tests. In one embodiment, the reagent compartment is coolable for cooling reagents contained therein.

In one embodiment, the system comprises a sampling unit for receiving samples for testing with respect to the first and second diagnostic tests.

In one embodiment, the system comprises at least one loading/unloading unit for loading and/or unloading reaction vessels on/from the first vessel holder.

In one embodiment, the system comprises a reaction vessel transferring unit comprising at least one gripper for gripping one reaction vessel for transferring reaction vessels from the first vessel holder to the second vessel holder and/or from the second vessel holder to the first vessel holder. Accordingly, the reaction vessel transferring unit can be used to transfer reaction vessels between the first and second vessel holders. In one embodiment, the reaction vessel transferring unit is capable of moving the gripper along a curved path for transferring reaction vessels between the first and second vessel holders. In one embodiment, the reaction vessel transferring unit comprises a socket, linearly translatable with respect to a base, and a build-up, rotatably attached to the socket and having a sliding member slidably engaged with a base-fixed sliding guide so as to rotate the build-up with respect to the socket, wherein the gripper is attached to the build-up.

In one embodiment, the system comprises a controller configured to operate the various units of the system for carrying out the first and/or second diagnostic tests on the samples. The controller may be a separate unit or may be an integral part of a system component. The controller controls the system in a way that the necessary steps for carrying out the first and/or second diagnostic tests are conducted. In one embodiment, the controller is embodied as a programmable logic controller running a computer-readable program provided with instructions to perform operations in accordance with a process operation plan.

In one embodiment, the controller is configured to operate the loading/unloading unit for loading reaction vessels on the first vessel holder and to operate the reaction vessel transferring unit for transferring reaction vessels from the first vessel holder to the second vessel holder and/or from the second vessel holder to the first vessel holder. Accordingly, the loading/unloading unit can advantageously be used for transferring reaction vessels to the second vessel holder via the first vessel holder, the latter one thus having a double functionality of transporting reaction vessels for testing samples with respect to the at least one first diagnostic test and transporting reaction vessels to the second vessel holder for testing with respect to the at least one second diagnostic test.

In one embodiment, the controller is configured to control a workflow comprising: operating the loading/unloading unit for loading one reaction vessel on the first vessel holder; operating the pipetting unit for dispensing one sample and one or more reagents adapted to the first diagnostic test into the reaction vessel; operating the first analytical unit for carrying out the first diagnostic test on the sample contained in and/or withdrawn from the reaction vessel loaded on the first vessel holder; operating the loading/unloading unit for unloading the reaction vessel loaded on the first vessel holder from the first vessel holder.

In one embodiment, the controller is configured to control a workflow comprising: operating the loading/unloading unit for loading one reaction vessel on the first vessel holder; operating the reaction vessel transferring unit for transferring the reaction vessel from the first vessel holder to the second vessel holder; operating the pipetting unit for dispensing one sample and one or more reagents adapted to the second diagnostic test into the reaction vessel; operating the second analytical unit for performing the at least one second diagnostic test on the sample contained in and/or withdrawn from the reaction vessel loaded on the second vessel holder; operating the reaction vessel transferring unit for transferring the reaction vessel from the second vessel holder to the first vessel holder; operating the loading/unloading unit for unloading the reaction vessel from the first vessel holder. Accordingly, samples can readily be tested with respect to the at least one second diagnostic test wherein the first vessel holder is used for transporting reaction vessels to the second vessel holder and wherein the first vessel holder is used for removing reaction vessels from the second vessel holder. Hence, the first vessel holder is a shared system component which advantageously can be used for transporting reaction vessels for processing samples with respect to the first and second diagnostic tests so as to save footprint and production costs.

In one embodiment, the controller is configured to operate the first analytical unit for at least temporarily simultaneously carrying out one or more first diagnostic tests on samples contained and/or withdrawn from reaction vessels loaded on the first vessel holder. In one embodiment, the controller is configured to operate the second analytical unit for at least temporarily simultaneously carrying out one or more second diagnostic tests on samples contained and/or withdrawn from reaction vessels loaded on the second vessel holder. In one embodiment, the controller is configured to operate the first and second analytical units for carrying out one or more second diagnostic tests on samples contained and/or withdrawn from reaction vessels loaded on the second vessel holder at least temporarily simultaneously with carrying out one or more first diagnostic tests on samples contained and/or withdrawn from reaction vessels loaded on the first vessel holder. Accordingly, samples can be processed in time- and cost-efficient manner.

Furthermore, a new method for testing liquid samples is proposed. The method can be configured in various ways in accordance with specific demands of the user and, e.g., can be used in connection with automated analyzers having various analytical methods. Specifically, the method of the invention can be used in a system or instrument according to the invention as above-described.

In one embodiment, the method comprises the following steps:
- loading one reaction vessel on a rotatable first vessel holder of a first analytical unit capable of carrying out at least one first diagnostic test,
- transferring the reaction vessel from the first vessel holder to a stationary second vessel holder of a second analytical unit capable of carrying out at least one second diagnostic test,
- dispensing one sample and one or more reagents adapted to the second diagnostic test into the reaction vessel,
- carrying out the second diagnostic test on the sample contained in and/or withdrawn from the reaction vessel loaded on the second vessel holder,
- transferring the reaction vessel from the second vessel holder to the first vessel holder,
- unloading the reaction vessel from the first vessel holder.

In one embodiment, the method comprises the following steps:
- loading one reaction vessel on the first vessel holder,
- dispensing one sample and one or more reagents adapted to the first diagnostic test into the reaction vessel,
- carrying out the first diagnostic test on the sample contained in and/or withdrawn from the reaction vessel loaded on the first vessel holder,
- unloading the reaction vessel from the first vessel holder.

In one embodiment, the method comprises one or more of the following steps:
- at least temporarily simultaneously carrying out one or more first diagnostic tests on samples contained and/or withdrawn from reaction vessels loaded on the first vessel holder;
- at least temporarily simultaneously carrying out one or more second diagnostic tests on samples contained and/or withdrawn from reaction vessels loaded on the second vessel holder;
- carrying out one or more second diagnostic tests on samples contained and/or withdrawn from reaction vessels loaded on the second vessel holder at least temporarily simultaneously with carrying out one or more first diagnostic tests on samples contained and/or withdrawn from reaction vessels loaded on the first vessel holder.

In one embodiment, the method comprises one or more of the following steps:
- rotating the first vessel holder after loading one reaction vessel on the first vessel holder and prior to transferring the reaction vessel from the first vessel holder to the second vessel holder;
- rotating the first vessel holder after transferring the reaction vessel from the second vessel holder to the first vessel holder and prior to unloading the reaction vessel from the first vessel holder.

In one embodiment, the method comprises a blank test for receiving an optical response signal of an empty reaction vessel with respect to the first and/or second diagnostic tests is carried out in the first vessel holder. Accordingly, reaction vessels for testing samples with respect to the first and second diagnostic tests can readily be tested on the first vessel holder.

In one embodiment, the method comprises a step in which at least one reagent adapted to the second diagnostic test is sucked in a pipette and heated therein prior to being discharged in a reaction vessel. Accordingly, reagents can be heated to improve reaction rates between sample and reagent(s).

In one embodiment, the method comprises a step in which one reaction vessel containing sample and one or more reagents adapted to the second diagnostic test is transferred from a first position of the second vessel holder to a second position of the second vessel holder wherein the sample and one or more reagents contained in the reaction vessel are mixed while being transferred to second position. Accordingly, sample and reagent(s) can be mixed during transport so as to process samples in a highly time-efficient manner.

The above-described various embodiments of the system and method of the invention can be used alone or in any combination thereof without departing from the scope of the invention.

### BRIEF DESCRIPTION OF THE DRAWINGS

Other and further objects, features and advantages of the invention will appear more fully from the following description. The accompanying drawings, which are incorporated in and constitute a part of the specification, illustrate preferred embodiments of the invention, and together with the general description given above and the detailed description given below, serve to explain the principles of the invention.
- FIG. 1: depicts a top view of an exemplary system for testing liquid samples;
- FIG. 2: depicts a top view of an enlarged detail of the system of FIG. 1;
- FIG. 3: depicts a perspective view of another enlarged detail of the system of FIG. 1;
- FIG. 4: depicts a top view of the second analytical unit of the system of FIG. 1;
- FIG. 5: depicts a sectional view according to line A-A of FIG. 4;
- FIG. 6: depicts a flowchart illustrating various workflows for testing liquid samples with the system of FIG. 1.

### DETAILED DESCRIPTION OF THE INVENTION

By way of illustration, specific exemplary embodiments in which the invention may be practiced now are described.

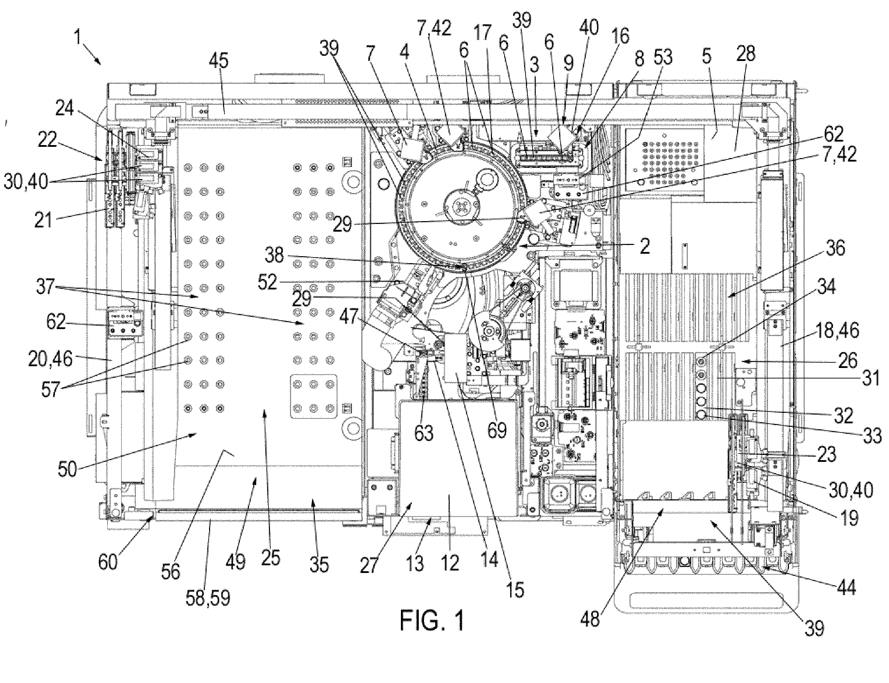

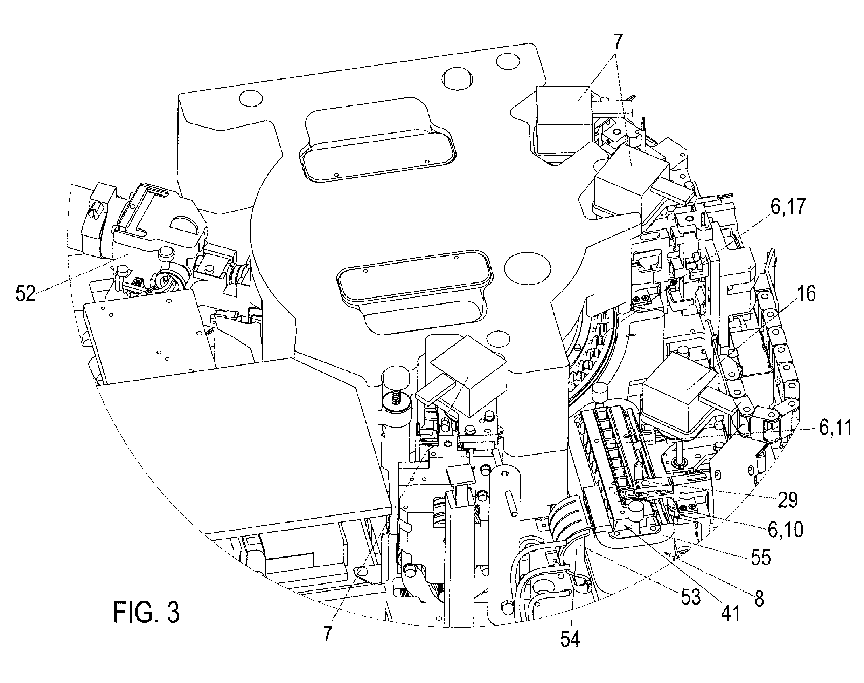

First reference is made to FIGS. 1 through 5 depicting various views of an integrated system for testing liquid samples generally referred to at reference numeral 1. In one embodiment, the system 1 is configured as an automated stand-alone instrument which can be placed on a workbench.

Specifically, the system 1 comprises a first analytical unit 2 and a second analytical unit 3 for testing liquid samples. The first analytical unit 2 is adapted for carrying out first diagnostic tests related to clinical-chemistry. As illustrated, in one embodiment, the first analytical unit 2 comprises a motor-driven rotor 4 rotatably fixed to a base 5 so as to be rotated with respect to the base 5. On the outer periphery, the rotor 4 is provided with a ring-like arrangement of reaction vessel seats 6, each of which being capable of detachably holding one reaction vessel 38 such as, but not limited to, a cuvette, adapted for receiving liquid sample and/or one or more reagents. Accordingly, reaction vessels 38 can be put into the vessel seats 6 or removed therefrom according to the specific demands of the user. The reaction vessel seats 6 of the rotor 4 can be brought to a pre-determined temperature according to the specific demands of the user so as to improve reaction rates between samples and reagents contained in the reaction vessels 38.

The first analytical unit 2 further comprises plural first workstations 7, configured for carrying out one or more processing steps related to clinical-chemistry and are adapted, for example, for mixing and pipetting of fluids and detecting of body substances which can be used to examine bodily fluids. Clinical-chemical sample processing is well-known to those of skill in the art, e.g. from US 2011/0293475A1, so that it is not necessary to elucidate it further herein. As illustrated, in one embodiment, the first workstations 7 are arranged along the outer circumference of the rotor 4 so that reaction vessels 38 loaded on the rotor 4 can be readily accessed.

Specifically, as illustrated in FIG. 1, in one embodiment, the first analytical unit 2 comprises plural first workstations 7 configured, inter alia, as mixing stations for mixing liquids contained in reaction vessels 38 and one clinical-chemistry test photometer 52 for optically measuring various clinical-chemical test parameters of the samples. Stated more particularly, in one embodiment, each first workstation 7 comprises a movable gripper 29, configured for gripping one reaction vessel 38, lifting the reaction vessel 38 from the reaction vessel seat 6, agitating the reaction vessel 38 for mixing liquids contained therein, and placing the reaction vessel 38 on a reaction vessel seat 6 of the rotor 4. For being gripped by the gripper 29, each reaction vessel 38 can, e.g., comprise an upper collar (not illustrated). For mixing of reaction vessels 38, the gripper 29 is operatively coupled to a mixing mechanism 42 driven by a motor 51. Accordingly, the gripper 29 has a double functionality of gripping reaction vessel 38 and mixing liquids contained therein.

The clinical-chemistry test photometer 52 comprises a light-generating device, configured to generate light of one or more wavelengths and a light-detecting device arranged in a manner to detect photometrically clinical-chemical test parameters of samples contained in the reaction vessels 38. The light-generating device can, e.g., comprise one or more diodes and one or more lamps. The light-detecting device can, e.g., comprise a charge coupled device (CCD), photo-diode array, photomultiplier tube array, charge injection device (CID), CMOS detector and/or avalanche photo diode. The clinical-chemistry test photometer 52 can further include light guiding elements such as, but not limited to, optical fibres, lenses and mirrors and/or light separating elements such as, but not limited to, transmission gratings, reflective gratings and prisms. The clinical-chemistry test photometer 52 is arranged in such a manner that light having passed through a reaction vessel 38 can be detected by the photometer 52. Detection is done by bringing one cuvette at a time to the photometer 52 while rotating the rotor. According to one embodiment this detection is done on-the-fly, i.e. while the rotor 4 is rotated. Accordingly, in the system 1, by rotating the rotor 4, individual reaction vessels 38 can be moved to the first workstations 7 for pipetting and mixing of samples and reagents contained therein to then be moved to the clinical-chemistry test photometer 52 for optical sample testing. Corresponding to the number of first workstations 7, different reaction vessels 38 can simultaneously be processed. While in FIG. 1 a number of three first workstations 7 and one clinical-chemistry test photometer 52 are shown for the purpose of illustration only, those of skill in the art will appreciate that any other number of first workstations 7 and clinical-chemistry test photometers 52 can be envisaged according to the specific demands of the user.

The second analytical unit 3 is configured for carrying out at least one second diagnostic test different from the first diagnostic tests which, in one embodiment, relates to a coagulation test involving optical measurements of the samples. Specifically, as illustrated in FIG. 1, in one embodiment, the second analytical unit 3 comprises a linear incubation block 8 fixedly secured to the base 5 so that the rotor 4 can be rotated with respect to the incubation block 8 kept stationary. As illustrated, the incubation block 8 is provided with a linear arrangement of reaction vessel seats 6, each of which being adapted for receiving one reaction vessel 38. Accordingly, reaction vessels 38 can be put on the reaction vessel seats 6 or removed therefrom according to the specific demands of the user. The linear incubation block 8 advantageously allows parallel sample pipetting and parallel sample detection in a facilitated and optimized optical setup wherein only one linear movement is required for translating reaction vessels 38 to the various reaction vessel seats 6. Since reaction vessels 38 do not undergo a movement while being seated in the incubation block 8 (which would be the case when placed on the rotor 4), reliability of coagulation tests of samples can be improved. The incubation block 8 can have a compact shape and can be manufactured in a time and cost-effective manner.

The reaction vessel seats 6 of the incubation block 8 can be brought to a pre-determined temperature so as to incubate (i.e. heating with a specific temperature for a specific time interval) samples and reagents contained in the reaction vessels 38. Heating of the samples can, e.g., be performed by means of electric heating such as a heating foil comprising heating wires. Except from an upper side, the incubation block 8 is encased by thermally isolating material.

As illustrated, in one embodiment, the linear arrangement of reaction vessel seats 6 comprises plural (e.g. three) test seats 10, one reference seat 41 and plural (e.g. seven) incubation seats 11 wherein each test seat 10 is coupled to a coagulation test photometer 53 for optically testing samples. Specifically, in one embodiment, the coagulation test photometer 53 comprises a light-generating device configured to generate light adapted to perform an optical measurement of the samples and a light-detecting device for detecting light transmitted through the samples. In one embodiment, light fibres 54 are used to direct the light to the reaction vessels 38 placed on the test seats 10. Due to the linear arrangement of reaction vessel seats 6, light generated by the coagulation test photometer 53 can readily be directed to the test seats 10 via the light fibres 54. Accordingly, plural (e.g. three) samples can simultaneously be tested and plural (e.g. seven) sample/reagent mixtures can be incubated prior to testing. The cycle time, i.e., the time required for processing one sample, by means of a coagulation test usually is longer than the cycle time of testing clinical-chemical parameters. Accordingly, samples usually stay longer in the second analytical unit 3 than in the first analytical unit 2. Furthermore, due to the fact that samples can be kept stationary during incubation, a detrimental influence on coagulation tests can be avoided by seating reaction vessels 38 for incubation of samples in the stationary incubation block 8. The linear arrangement of reaction vessels seats 6, in particular test seats 10, allows for an easy and quick transport of reaction vessels 38 between reaction vessel seats 6. Furthermore, optical properties of samples can readily be determined, e.g., in parallel due to an easy adjustment of the optical components.

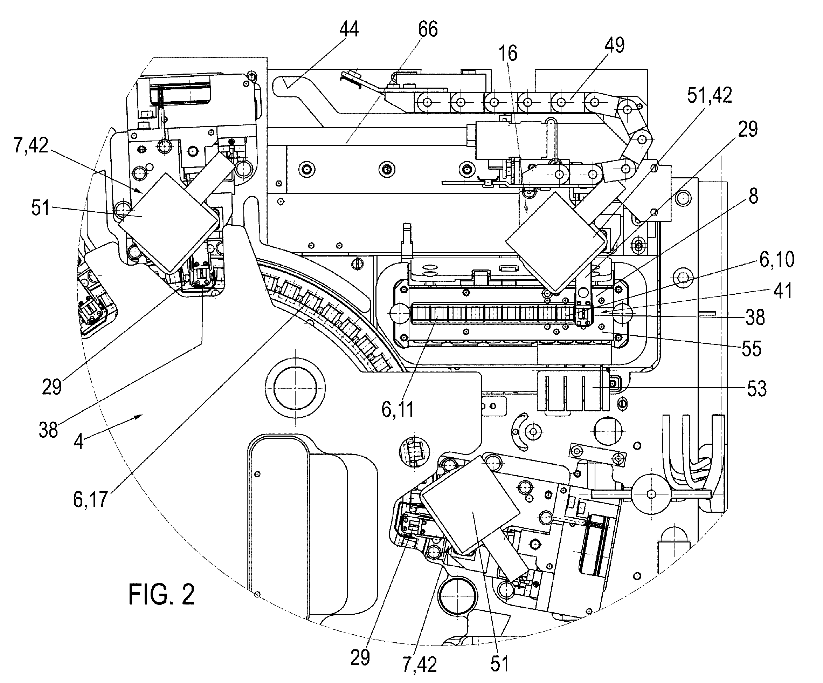

The second analytical unit 3 further comprises a reaction vessel transferring device 16, configured for transferring reaction vessels 38 from the rotor 4 to the incubation block 8 and from the incubation block 8 to the rotor 4. Specifically, in one embodiment, the reaction vessel transferring device 16 comprises a movable gripper 29, adapted for gripping one reaction vessel 38 and transferring the reaction vessel 38 between a first picking position 17 at the rotor 4 (i.e. reaction vessel seat 6 of the rotor 4) and the linear incubation block 8. As used herein, the term "first picking position" is related to a specific position of the gripper 29 in which the gripper 29 has an appropriate (radial) position with respect to a rotational axis of the rotor 4 (i.e. gripper 29 is in orthogonal arrangement with respect to the outer circumference of the rotor 4). Accordingly, reaction vessels 38 can readily be removed or placed on the rotor 4. By rotating the rotor 4, reaction vessels 38 loaded on the rotor 4 can be moved to the first picking position 17 for gripping by the reaction vessel transferring device 16. The reaction vessel transferring device 16 is further detailed below with respect to FIGS. 2 to 5.

With continued reference to FIG. 1, the system 1 further comprises a loading/unloading unit 27 for loading/unloading reaction vessels 38 to/from the rotor 4. Specifically, in one embodiment, the loading/unloading unit 27 comprises a reaction vessel feeder 12, adapted to receive a plurality of reaction vessels 38 which can be loaded to the reaction vessel feeder 12 via a reaction vessel loading area 13. The reaction vessel feeder 12 thus serves as a reservoir for storing reaction vessels 38 in bulk. In one embodiment, the reaction vessel feeder 12 is configured for individualizing reaction vessels 38 and transporting individualized reaction vessels 38 to a handover position 14 via a transport rail 63.

As illustrated in FIG. 1, in one embodiment, the loading/unloading unit 27 further comprises an input/output workstation 15 configured for transporting reaction vessels 38 from the handover position 14 to a second picking position 69 (i.e. reaction vessel seat 6 of the rotor 4) and from the second picking position 69 to a waste position 47. In one embodiment, the input/output workstation 15 is provided with a movable gripper 29 capable of gripping one reaction vessel 38 in handover position 14 and transporting the reaction vessel 38 to the second picking position 69 on the rotor 4. As used herein, the term "second picking position" is related to a specific position of the gripper 29 of the input/output workstation 15 in which the gripper 29 has an appropriate position for gripping one reaction vessel 38 loaded on the rotor 4. Furthermore, the gripper 29 is capable of gripping one reaction vessel 38 in second gripping position 69 on the rotor 4 and transporting the reaction vessel 38 to the waste position 47. In waste position, used reaction vessels 38 can fall into a vessel waste (not illustrated). Accordingly, in the system 1, reaction vessels 38 can be transported from the handover position 14 to the rotor 4 and from the rotor 4 to the waste position 47 by operating the gripper 29 of the input/output workstation 15.

The system 1 further comprises a sampling unit 26 configured for receiving samples to be tested by the first and/or second analytical units 2, 3. As illustrated in FIG. 1, in one embodiment, the sampling unit 26 comprises a sample storage area 36 provided with plural rack seats 31, each of which being adapted for receiving one sample rack 32 for holding a plurality of sample vessels 33 such as, but not limited to, sample tubes. In one embodiment, each sample rack 32 comprises a linear arrangement of, e.g. five, sample vessel seats 34, with each sample vessel seat 34 being configured for holding one sample vessel 33.

Specifically, as illustrated, in one embodiment, the samples can be manually or automatically loaded/unloaded to/from a front-sided sample loading area 39 coupled to a rack transport mechanism 48 configured for transporting individual sample racks 32 between the sample loading area 39 and the sample storage area 36. Furthermore, the sampling unit 26 is provided with a reader 50 (e.g. barcode scanner or RFID reader) configured to identify sample racks 32 and/or sample vessels 33 by reading information stored in machine-readable information tags attached to the sample racks 32 and/or sample vessels 33.

The system 1 yet further comprises a reagent compartment 25 for storing reagents related to the first and second diagnostic tests. Specifically, as illustrated in FIG. 1, in one embodiment, the reagent compartment 25 comprises a reagent storage area 37 provided with reagent containers (not illustrated) containing reagent. Stated more particularly, in one embodiment (not further detailed), the reagent storage area 37 comprises a plurality of reagent container seats for receiving reagent containers which are arranged in shelf-like storages ("warehouse"), wherein a reagent container handler is arranged between the shelf-like storages for transporting individual reagent containers. Specifically, FIG. 1 depicts a top cover 56 of the reagent storage area 37 made of isolating material and provided with a plurality of pipetting holes 57 for pipetting of reagents contained in reagent containers placed below the top cover 56 (i.e. placed on a highest level of two shelf-like storages). Accordingly, reagent containers can be stored in different levels of the shelf-like storages and can be positioned at the highest level when needed. In one embodiment, the reagent compartment 25 is actively coolable so that reagents can be stored therein for an extended period of time. In order to keep the reagents at a pre-determined (low) temperature, the reagent compartment 25 is encased by thermally isolating material.

As further illustrated in FIG. 1, in one embodiment, reagent containers can be manually or automatically loaded/unloaded to/from a front-sided reagent loading area 35. Specifically, in one embodiment, the reagent compartment 25 comprises a drawer 58 provided with a handle 59 so that the drawer 58 can readily be pulled out of a frame 60 or pushed in, respectively. When pulling the drawer 58 out of the frame 60, the reagent loading area 35 is accessible from outside so as to load reagent containers thereon and to remove used reagent containers, respectively. Furthermore, the reagent compartment 25 is provided with a reader 50 (such as a barcode scanner or RFID reader) which can be used to identify reagent containers by reading information stored in a machine-readable information tag attached to the reagent containers. Accordingly, information related to the reagents such as, but not limited to, the sort of reagents, expiration dates and the like can be read to assist the automatic handling of the reagent containers. In one embodiment, the reader 50 is configured to read information from information tags while transporting reagent containers in the reagent storage compartment 25. In one embodiment, the reader 50 is configured to read information from information tags attached to reagent containers positioned in the reagent loading area 35 and/or reagent storage area 37.

With continued reference to FIG. 1, the system 1 also comprises a pipetting unit 22 for pipetting liquids which, in one embodiment, comprises a first pipettor 23 and a second pipettor 24 coupled to a first transfer mechanism 18 and a second transfer mechanism 20, respectively, for being transported relative to the base 5. Stated more particularly, in one embodiment, each of the transfer mechanisms 18, 20 comprises one (jointly used) stationary beam 45 and one movable beam 46 orthogonally arranged with and movable along the stationary beam 45. Specifically, in one embodiment, a first transfer head 19 carrying the first pipettor 23 is fixed to the one movable beam 46 and a second transfer head 21 carrying the second pipettor 24 is fixed to the other movable beam 46, with each transfer head 19, 21 being movable along the respective movable beam 46. Accordingly, the transfer heads 19, 21 can respectively be moved along the stationary beam 45 by moving the movable beam 46 along the stationary beam 45 and can also be moved along the movable beam 46 so as to have components of movement in two directions of travel in a horizontal plane over the base 5. Furthermore, the transfer heads 19, 21 are respectively movable in a third direction of travel towards and away from the base 5. Accordingly, the first pipettor 23 and the second pipettor 24 can respectively be moved in a horizontal plane over the base 5 and in vertical direction relative to the base 5.

Each of the first and second pipettors 23, 24 comprises one or more pipetting channels 30 for pipetting liquids, with each pipetting channel 30 comprising one pipette 40 operatively coupled to a pump (not illustrated) for generating a positive or negative pressure therein for discharging and sucking-in liquids, respectively. In one embodiment, the first pipettor 23 is provided with two pipetting channels 30, one of which being used for pipetting samples for clinical-chemistry and coagulation tests and the other one being used for pipetting reagents related to clinical-chemistry. In one embodiment, the second pipettor 24 is provided with four pipetting channels 30 provided with four pipettes 40, e.g., serially arranged with respect to each other, for pipetting reagents related to the coagulation tests. In one embodiment, at least one of the pipettes 40 of the second pipettor 24 is heatable so as to heat liquids (reagents) contained therein. Accordingly, reagents can be pre-heated before reacting with samples in order to increase reaction rates. The pipettes 40 of the first and secondpipettors 23, 24 can, e.g., be provided with re-usable metallic needles which can be washed in wash stations 62.

In order to control the various workflows of the system 1, the system 1 further includes a controller 28 which may, e.g., be embodied as programmable logic device (microprocessor) running a computer-readable program provided with instructions to perform operations in accordance with predetermined process routines (workflows) for testing liquid samples. For this purpose, the controller 28 is electrically connected to the various components which require control and/or provide information including the first and second analytical units 2, 3, the pipetting unit 22, the loading/unloading unit 27 and the reaction vessel transferring device 16.

Referring to FIGS. 2 to 5, the second analytical unit 3 comprising the reaction vessel transferring device 16 is further described.

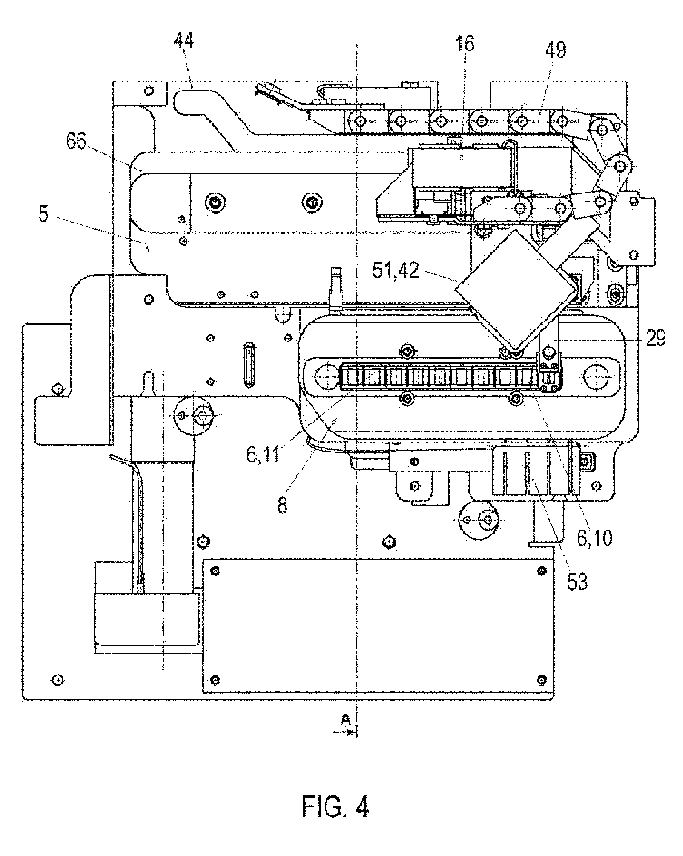

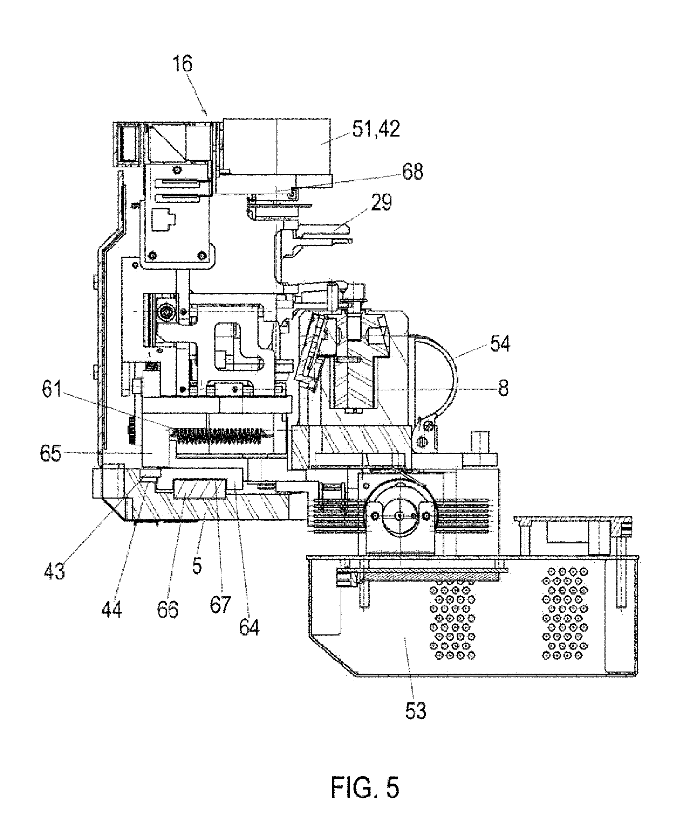

Accordingly, in one embodiment, the reaction vessel transferring device 16 arranged adjacent the linear incubation block 8 comprises a socket 64 and a build-up 65 (see FIG. 5) attached to the socket 64 and provided with a movable gripper 29 for gripping one reaction vessel 38. As illustrated in FIGS. 4 and 5, a linear guiding rail 66 is attached to the base 5 in parallel alignment with respect to the linear arrangement of reaction vessels seats 6 of the incubation block 8 for guiding the socket 64. Correspondingly, on the lower side, the socket 64 has a generally U-shaped recess 67 engaged with the guiding rail 66 so that the socket 64 can be moved along the guiding rail 66. In one embodiment, the socket 64 is configured to slide along the guiding rail 66. In one embodiment, the socket 64 is adapted to roll-off the guiding rail 66.

In one embodiment, the build-up 65 is rotatably fixed to the socket 64 so that the build-up 65 can be rotated around a vertical rotational axis 68 with respect to the socket 64. Specifically, in one embodiment, a resilient member like a spring 61 having one end fixed to the socket 64 and the other end fixed to the build-up 65 is used to pre-tension the build-up 65 in rotation relative to the socket 64. Stated more particularly, by action of the spring 61, the build-up 65 is pre-tensioned in such a manner that the gripper 29 attached to the build-up 65 is rotated towards the incubation block 8. Furthermore, in one embodiment, the build-up 65 is provided with a guiding element 43 which can be brought in engagement with an S-curved guiding groove 44, with the guiding element 43 moving along and being guided by the curved guiding groove 44 so as to control the rotational movement of the build-up 65 when translating the socket 64 with respect to the guiding rail 66. In one embodiment, the guiding element 43 is configured to slide along the guiding groove 44. In one embodiment, the guiding element 43 is adapted to roll-off the guiding groove 44. Accordingly, when moving the socket 64 along the guiding rail 66, the build-up 65 is rotated around the rotational axis 68 as controlled by the shape of the guiding groove 44.

As a result, the gripper 29 can be brought in a suitable position both with respect to the reaction vessel seats 6 of the incubation block 8 and with respect to the first picking position 17 for gripping reaction vessels 38. Stated more particularly, controlled by the S-curved path of the guiding groove 44, when translating the socket 64 towards the rotor 4, the gripper 29 is rotated away from the incubation block 8, then towards the rotor 4, to finally reach a position in which the gripper 29 is radially aligned with respect to the rotational axis 68 of the rotor 4 (orthogonal to the outer circumference of the rotor 4 and the first picking position 17). Furthermore, when translating the socket 64 away from the rotor 4, the gripper 29 is rotated towards the incubation block 8 to then return to a position in which the gripper 29 is orthogonal with respect to the rotor 4 and incubation block 8. Accordingly, with a single translational movement of the socket 8 and rotation of the build-up, a time and cost-effective transport of reaction vessels 38 can be reached. Furthermore, a comparably low footprint of the system 1 can be reached.

The gripper 29 is also movable in vertical direction so as to be moved towards and away from reaction vessels 38. For operating the gripper 29, the reaction vessel transferring device 16 comprises a gripper moving mechanism (not further detailed). A cable chain 49 protects electric lines (not illustrated) for providing electric energy and transmitting control signals.

As illustrated, in one embodiment, the reaction vessel transferring device 16 is provided with a mixing mechanism 42 operatively coupled to the gripper 29 to agitate one reaction vessel 38 gripped by the gripper 29 similar to the first workstations 7.

In the following, various workflows for testing liquid samples under control of controller 28 are described.

Specifically, in one embodiment, the controller 28 is set up to control a"coagulation workflow" relating to testing samples with respect to coagulation and a "clinical-chemistry workflow" relating to testing samples with respect to clinical-chemical test parameters.

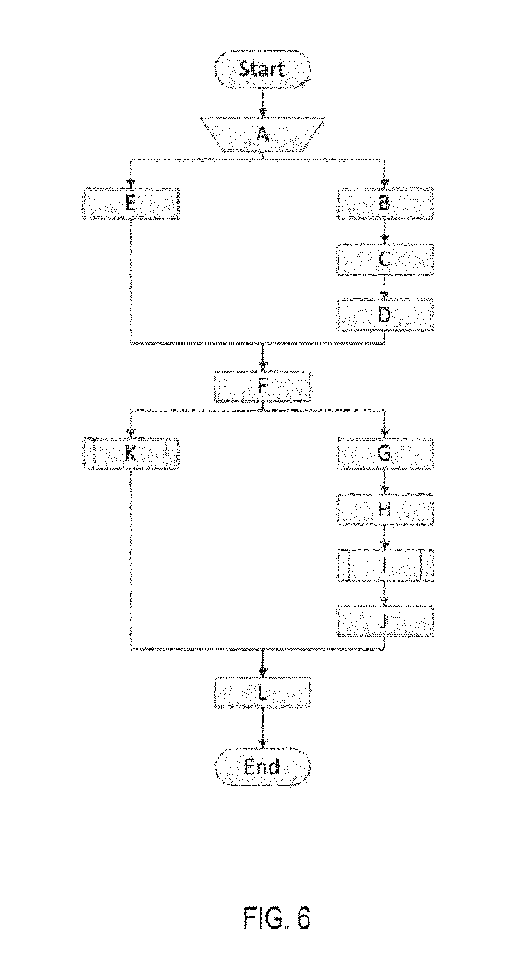

With particular reference to FIG. 6, both workflows start with manually or automatically loading samples, reagents and consumables to the system 1 (step A). Stated more particularly, samples to be tested are loaded to the sample loading area 39, reagent container related to the first and second diagnostic tests are loaded to the reagent loading area 35, and reaction vessels 38 such as cuvettes are loaded to the reaction vessel feeder 12.

Then, in a further step of both workflows, each sample rack 32 is transported from the sample loading area 39 to the sample storage area 36 by means of the rack transport mechanism 48 and each reagent container is transported from the reagent loading area 35 to the reagent storage area 37 by means of the reagent container handler (step B).

In a further step of both workflows, each sample rack 32 and/or each samples vessel 33 as well as each reagent container is identified (e.g. during transport into the sample storage area 36 and reagent storage area 37, respectively) (step C).

Then, in a further step of both workflows, the sample racks 32 and reagent containers are positioned in the sample storage area 36 and reagent storage area 37, respectively (step D).

In a further step of both workflows, the reaction vessel feeder 12 places reaction vessels 38 in the handover position 14 (step E).

Irrespective of using the first or second diagnostic tests, in a further step of both workflows, the reaction vessels 38 are transferred from the handover position 14 to reaction vessel seats 6 of the rotor 4 by operating the gripper 29 of the input/output workstation 15 and placing reaction vessels 38 on a respective one of the reaction vessel seats 6 brought into the second picking position 69 by rotating the rotor 4 (step F).

In normal use, a plurality of empty reaction vessels 38 is loaded onto the rotor 4 for testing samples by repeating step E and step F. Furthermore, steps B, C, D, E and F may run at least in part simultaneously.

In case sample testing with respect to coagulation is ordered, for continuing the "coagulation workflow", the rotor 4 is rotated to bring one empty reaction vessel 38 loaded thereon to the first picking position 17 (step G).

Then, continuing the "coagulation workflow", the reaction vessel 38 in first picking position 17 is transferred to the incubation block 8 by operating the gripper 29 of the reaction vessel transferring device 16 (step H). Specifically, the gripper 29 is moved to the first picking position 17, grips the reaction vessel 38 and transfers it to an incubation seat 11 of the incubation block 8.

Then, a coagulation test routine embedded in the "coagulation workflow" starts (step I). Specifically, for performing the coagulation test routine, the sample to be tested is sucked-in from the corresponding sample vessel 33 in the sample storage area 36 and discharged into the reaction vessel 38 transferred to the incubation seat 11 by operating the first pipettor 23. Furthermore, one or more reagents related to the coagulation test are sucked-in from the corresponding reagent containers 38 in the reagent storage area 37 and discharged into the reaction vessel 38 by operating the second pipettor 24. According to one embodiment, at least one reagent is pipetted using a heatable pipette of the second pipettor 24 so as to have an optimal reagent temperature for reacting with the sample. The reagents can be pipetted into the reaction vessel 38 prior to or after pipetting of the sample. Furthermore, pipetting may occur while being gripped or while seated in a reaction vessel seat 6. In the incubation seat 11, sample and reagents contained in the reaction vessel 38 are incubated (i.e. kept at a predefined temperature of, e.g., 37°C for a pre-determined time interval) for the reaction to occur. Prior to or after incubation, the reaction vessel 38 is lifted from the incubation seat 11 by means of the gripper 29 of the reaction vessel transferring device 16 and mixed by operating the mixing mechanism 42 and/or another reagent is pipetted. The reaction vessel 38 then is transported to one test seat 10 by the gripper 29, followed by an optical measurement of the turbidity of the sample using the coagulation test photometer 53.

Then, for continuing the "coagulation workflow", the reaction vessel 38 is transported from the incubation block 8 to one reaction vessel seat 6 of the rotor 4 brought in the first picking position 17 by rotating the rotor 4 by operating the gripper 29 of the reaction vessel transferring device 16 (step J), followed by rotating the rotor 4 so as to bring the reaction vessel 38 into the second picking position 69 and removing the reaction vessel 38 from the rotor 4 by operating the gripper 29 of the input/output workstation 15 (step L). Specifically, in the second picking position 69, the reaction vessel 38 is gripped by the gripper 29 of the input/output workstation 15 and transferred to the waste position 47. Then the "coagulation workflow" ends.

In case sample testing with respect to clinical chemistry is ordered, for continuing the "clinical-chemistry workflow", a clinical-chemistry test routine embedded in the "clinical-chemistry workflow" starts (step K).

For performing the clinical-chemistry test routine, the sample to be tested by the various clinical-chemical tests is sucked-in from the corresponding sample vessel 33 in the sample storage area 36 and discharged into one reaction vessel 38 on the rotor 4. Furthermore, one or more reagents related to the clinical-chemical tests are sucked-in from the corresponding reagent containers 38 in the reagent storage area 37 and discharged into the reaction vessel 38 on the rotor 4. The reagents can be pipetted into the reaction vessel 38 prior to or after pipetting of the sample. The reaction vessel 38 then is transported to one first workstation 7 by rotating the rotor 4 for pipetting the sample and reagents. The reagent vessel 38 then is gripped by the gripper 29 of the first workstation 7 and the mixing mechanism 42 is operated. Then, the reaction vessel 38 is again placed on a reaction vessel seat 6 of the rotor 4, followed by moving the reaction vessel 38 to the clinical-chemistry test photometer 52 for measuring the various clinical-chemical test parameters.

Then, continuing the "clinical-chemistry workflow", the reaction vessel 38 containing sample and reagents is removed from the rotor 4 by rotating the rotor 4 to the second picking position 69 and operating the gripper 29 of the input/output workstation 15 (step L). Specifically, in the second picking position 69, the reaction vessel 38 is gripped by the gripper 29 and transferred to the waste position 47. Then the "clinical-chemistry workflow" ends.

In one embodiment of the above-described workflows, the controller 28 is configured to operate the first and second analytical units 2, 3 for at least temporarily simultaneously carrying out clinical-chemical tests on plural samples contained in reaction vessels 38 of the rotor 4 and/or for at least temporarily simultaneously carrying out coagulation tests on plural samples contained in reaction vessels 38 of the incubation block 8.

In one embodiment of the above-described workflows, sample tests are ordered by user-interaction, e.g., by typing-in corresponding instructions in a control panel. In one alternative embodiment, sample tests are ordered by reading instructions stored in machine-readable information tags of sample racks 32 and/or samples vessels 33.

In a further workflow, the controller 28 is setup to control a blank test for receiving an optical signal of an empty reaction vessel 38 for use with the first and/or second diagnostic tests in the rotor 4. Specifically, optical properties of empty reaction vessels 38 can readily be determined by operating the clinical-chemistry test photometer 52 so as to obtain a calibration signal to be used in coagulation tests and/or clinical-chemical tests of the samples.

In the above-described workflows, samples can be tested with respect to coagulation and clinical-chemical test parameters. Specifically, for performing the coagulation tests, reaction vessels 38 can be transported from the reaction vessel feeder 12 to the incubation block 8 via the rotor 4 wherein reaction vessels can be loaded onto the rotor 4 by means of the input/output workstation 15 and transported from the rotor 4 to the incubation block 8 by means of the reaction vessel transferring device 16. Furthermore, reaction vessels 38 can be transported from the incubation block 8 to the waste position 47 via the rotor 4 wherein reaction vessels can be loaded onto the rotor 4 by means of the reaction vessel transferring device 16 and transported from the rotor 4 to the waste position 47 by means of the input/output workstation 15. Furthermore, the rotor 4 can also be used for testing samples with respect to clinical-chemistry. Specifically, the rotational movement of the rotor 4 for moving empty reaction vessels 38 to the first picking position 17 and used reaction vessels 38 to the second picking position 69 can be synchronized with testing of samples with respect to clinical-chemistry.

A major advantage with respect to time and costs for processing samples is given by the fact that the system 1 has a variety of shared resources. Specifically, the sampling unit 26, the pipetting unit 22 and the reagent compartment 25 is used for both coagulation and clinical-chemistry tests. Furthermore, the rotor 4 and the reaction vessel feeder 12 are used for both testing samples with respect to clinical-chemical test parameters and transporting samples to/from the incubation station 8. Furthermore, by sharing components of the system 1 for both coagulation and clinical-chemical tests, the footprint of the system 1 can strongly be reduced compared to the case of providing individual system components. Moreover, reaction vessels 38 can be transported to the incubation block 8 in a highly time-efficient manner without a need to specify in advance for which tests individual reaction vessel 38 are to be used.

### Reference list

- 1: System
- 2: First analytical unit
- 3: Second analytical unit
- 4: Rotor
- 5: Base
- 6: Reaction vessel seat
- 7: First workstation
- 8: Incubation block
- 9: Second workstation
- 10: Test seat
- 11: Incubation seat
- 12: Reaction vessel feeder
- 13: Reaction vessel loading area
- 14: Handover position
- 15: Input/output workstation
- 16: Reaction vessel transferring device
- 17: First Picking position
- 18: First transfer mechanism
- 19: First transfer head
- 20: Second transfer mechanism
- 21: Second transfer head
- 22: Pipetting unit
- 23: First pipettor
- 24: Second pipettor
- 25: Reagent compartment
- 26: Sampling unit
- 27: Loading/unloading unit
- 28: Controller
- 29: Gripper
- 30: Pipetting channel
- 31: Rack seat
- 32: Sample rack
- 33: Sample vessel
- 34: Sample vessel seat
- 35: Reagent loading area
- 36: Sample storage area
- 37: Reagent storage area
- 38: Reaction vessel
- 39: Sample loading area
- 40: Pipette
- 41: Reference seat
- 42: Mixing mechanism
- 43: Guiding element
- 44: Guiding groove
- 45: Stationary beam
- 46: Movable beam
- 47: Waste position
- 48: Rack transport mechanism
- 49: Cable chain
- 50: Reader
- 51: Motor
- 52: Clinical-chemistry test photometer
- 53: Coagulation test photometer
- 54: Light fibre
- 55: Isolating material
- 56: Top cover
- 57: Pipetting hole
- 58: Drawer
- 59: Handle
- 60: Frame
- 61: Spring
- 62: Wash station
- 63: Transport rail
- 64: Socket
- 65: Build-up
- 66: Guiding rail
- 67: Recess
- 68: Rotational axis
- 69: Second picking position

## Claims

1. An automated system (1) for testing liquid samples, comprising:
a first analytical unit (2) for carrying out at least one first diagnostic test comprising a rotatable first vessel holder (4) for detachably holding reaction vessels (38);
a second analytical unit (3) for carrying out at least one second diagnostic test comprising a stationary second vessel holder (8) for detachably holding reaction vessels (38);
a pipetting unit (22) comprising one or more pipettors (23, 24) for dispensing and/or withdrawing liquids into/from the reaction vessels (38);
a reagent compartment (25) for receiving reagent containers containing at least two types of reagents adapted to the first and second diagnostic tests;
a sampling unit (26) for receiving samples for the first and second diagnostic tests;
at least one loading/unloading unit (27) for loading and/or unloading reaction vessels (38) on/from the first vessel holder (4);
a reaction vessel transferring unit (16) comprising at least one gripper (29) for gripping one reaction vessel (38) for transferring reaction vessels (38) from the first vessel holder (4) to the second vessel holder (8) and/or from the second vessel holder (8) to the first vessel holder (4);
a controller (28) configured to operate the units for carrying out the first and/or second diagnostic tests on the samples comprising operating the loading/unloading unit (27) for loading reaction vessels (38) on the first vessel holder (4) and operating the reaction vessel transferring unit (16) for transferring reaction vessels (38) from the first vessel holder (4) to the second vessel holder (8) and/or from the second vessel holder (8) to the first vessel holder (4).

2. The system (1) according to claim 1, wherein the controller (28) is configured to control
- a workflow comprising: operating the loading/unloading unit (28) for loading one reaction vessel (38) on the first vessel holder (4); operating the pipetting unit (22) for dispensing one sample and one or more reagents adapted to the first diagnostic test into the reaction vessel (38); operating the first analytical unit (3) for carrying out the first diagnostic test on the sample contained in the reaction vessel (38) loaded on the first vessel holder (4); operating the loading/unloading unit (28) for unloading the reaction vessel (38) from the first vessel holder (4); and
- a workflow comprising: operating the loading/unloading unit (27) for loading one reaction vessel (38) on the first vessel holder (4); operating the reaction vessel transferring unit (16) for transferring the reaction vessel (38) from the first vessel holder (4) to the second vessel holder (8); operating the pipetting unit (22) for dispensing one sample and one or more reagents adapted to the second diagnostic test into the reaction vessel (38); operating the second analytical unit (3) for performing the second diagnostic test on the sample contained in the reaction vessel (38) loaded on the second vessel holder (8); operating the reaction vessel transferring unit (16) for transferring the reaction vessel (38) from the second vessel holder (8) to the first vessel holder (4); operating the loading/unloading unit (28) for unloading the reaction vessel (38) from the first vessel holder (4).

3. The system (1) according to claim 2, wherein the controller (28) is configured:
- to operate the first analytical unit (2) for at least temporarily simultaneously carrying out one or more first diagnostic tests on samples contained in reaction vessels (38) loaded on the first vessel holder (4), and/or
- to operate the second analytical unit (3) for at least temporarily simultaneously carrying out one or more second diagnostic tests on samples contained in reaction vessels (38) loaded on the second vessel holder (8), and/or
- to operate the first and second analytical units (2, 3) for carrying out one or more second diagnostic tests on samples contained in reaction vessels (38) loaded on the second vessel holder (8) at least temporarily simultaneously with carrying out one or more first diagnostic tests on samples contained in reaction vessels (38) loaded on the first vessel holder (4).

4. The system (1) according to any one of the preceding claims 1 to 3, wherein the second vessel holder (8) has a linear arrangement of holding seats (6), each of which being capable of holding one reaction vessel (38).

5. The system (1) according to any one of the preceding claims 1 to 4, wherein the pipetting unit (22) comprises at least one first pipettor (23) for pipetting of one or more reagents of the first diagnostic test and at least one second pipettor (24) for pipetting of one or more reagents of the second diagnostic test, the second pipettor (24) being heatable for heating reagent contained therein.

6. The system (1) according to any one of the preceding claims 1 to 5, wherein the reaction vessel transferring unit (16) is capable of moving the gripper (29) along a curved path between a picking position (17) and at least one reaction vessel seat (6) of the second vessel holder (8).

7. The system (1) according to claim 6, wherein the reaction vessel transferring unit (16) comprises:
a linearly translatable socket (64);
a build-up (65), rotatably attached to the socket (64) and having a guiding element (43) which can be brought in engagement with a guiding path (44) to control rotation of the build-up (65) with respect to the socket (64), wherein the gripper (29) is attached to the build-up (65).

8. The system (1) according to any one of the preceding claims 1 to 7, wherein a cycle time of the second diagnostic test is longer than a cycle time of the first diagnostic test.

9. A method for testing liquid samples, comprising:
- loading one reaction vessel (38) on a rotatable first vessel holder (4) of a first analytical unit (2) capable of carrying out at least one first diagnostic test,
- transferring the reaction vessel (38) from the first vessel holder (4) to a stationary second vessel holder (8) of a second analytical unit (3) capable of carrying out at least one second diagnostic test,
- dispensing one sample and one or more reagents adapted to the second diagnostic test into the reaction vessel (38),
- carrying out the second diagnostic test on the sample contained in the reaction vessel (38) loaded on the second vessel holder (8),
- transferring the reaction vessel (38) from the second vessel holder (8) to the first vessel holder (4),
- unloading the reaction vessel (38) from the first vessel holder (4).

10. The method according to claim 9, comprising:
- loading one reaction vessel (38) on the first vessel holder (4),
- dispensing one sample and one or more reagents adapted to the first diagnostic test into the reaction vessel (38),
- carrying out the first diagnostic test on the sample contained in the reaction vessel (38) loaded on the first vessel holder (4),
- unloading the reaction vessel (38) from the first vessel holder (4).

11. The method according to any one of the preceding claims 9 or 10, comprising one or more of the following steps:
- at least temporarily simultaneously carrying out one or more first diagnostic tests on samples contained in reaction vessels (38) loaded on the first vessel holder (4);
- at least temporarily simultaneously carrying out one or more second diagnostic tests on samples contained in reaction vessels (38) loaded on the second vessel holder (8);
- carrying out one or more second diagnostic tests on samples contained in reaction vessels (38) loaded on the second vessel holder (8) at least temporarily simultaneously with carrying out one or more first diagnostic tests on samples contained in reaction vessels (38) loaded on the first vessel holder (4).

12. The method according to any one of the preceding claims 9 to 11, comprising one or more of the following steps:
- rotating the first vessel holder (4) after loading one reaction vessel (38) on the first vessel holder (4) and prior to transferring the reaction vessel (38) from the first vessel holder (4) to the second vessel holder (8);
- rotating the first vessel holder (4) after transferring the reaction vessel (38) from the second vessel holder (8) to the first vessel holder (4) and prior to unloading the reaction vessel (38) from the first vessel holder (4).

13. The method according to any one of the preceding claims 9 to 12, wherein a blank test for receiving an optical response signal of an empty reaction vessel (38) with respect to the first and/or second diagnostic tests is carried out in the first vessel holder (4).

14. The method according to any one of the preceding claims 9 to 13, wherein at least one reagent adapted to the second diagnostic test is sucked in a pipette (40) and heated therein prior to being discharged in a reaction vessel (38).

15. The method according to any one of the preceding claims 9 to 14, wherein one reaction vessel (38) containing sample and one or more reagents adapted to the second diagnostic test is transferred from a first position (11) of the second vessel holder (8) to a second position (10) of the second vessel holder (8) wherein the sample and one or more reagents contained in the reaction vessel (38) are mixed while being transferred to second position (10).
